(19) Europäisches Patentamt
European Patent Office
Office européen des brevets

(11) **EP 1 847 704 B1**

(12) **EUROPÄISCHE PATENTSCHRIFT**

(45) Veröffentlichungstag und Bekanntmachung des Hinweises auf die Patenterteilung:
**17.03.2010 Patentblatt 2010/11**

(51) Int Cl.:
*F02D 41/14* (2006.01)     *F02D 35/00* (2006.01)

(21) Anmeldenummer: **06008041.3**

(22) Anmeldetag: **19.04.2006**

(54) **Verfahren und Vorrichtung zum Regeln eines Kraftstoffeinspritzsystems**

Mehtod and apparatus for controlling a fuel injection system

Procédé et dispositif de commande d'une système d'injection de carburant

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**24.10.2007 Patentblatt 2007/43**

(73) Patentinhaber: **Delphi Technologies, Inc.**
**Troy, Michigan 48007 (US)**

(72) Erfinder: **Arkenbosch, Herald F.**
**54680 Errouville (FR)**

(74) Vertreter: **Robert, Vincent et al**
**Delphi European Headquarters**
**Legal**
**64, Avenue de la Plaine de France**
**Paris Nord II**
**BP 65059 Tremblay-en-France**
**95972 Roissy Charles de Gaulle Cedex (FR)**

(56) Entgegenhaltungen:
**EP-A2- 0 844 380     EP-A2- 0 919 711**
**EP-A2- 0 919 714     US-A- 6 085 718**

**Beschreibung**

Die Erfindung bezieht sich auf ein Verfahren zum Betrieb eines Antriebsaggregats auf Basis einer Verbrennung mindestens eines Kraftstoffs, wobei jeder Kraftstoff in an sich bekannter Art jeweils einen Energiegehalt aufweist. Sie bezieht sich weiterhin auf eine Vorrichtung zur Durchführung des Verfahrens sowie eine durch einen Computer ausführbare Implementierung des Verfahrens.

Verfahren zum Betrieb eines Antriebsaggregats und Antriebsaggregate sind allgemein bekannt. Häufig eingesetzt werden z.B. Verbrennungsmotoren. Diese werden beispielsweise in Kraftfahrzeugen oder in feststehenden Maschinen zur Energieumwandlung eingesetzt. Häufig verwendete Kraftstoffe umfassen z.B., Otto- oder Dieselkraftstoff, Biodiesel, Erdgas (compressed natural gas, CNG), Autogas (liquefied petroleum gas, LPG) oder Wasserstoff.

Als einfaches Beispiel einer Verbrennung kann die Umsetzung von Methan und molekularem Sauerstoff ($O_2$) zu Kohlensdioxid und Wasser unter Freisetzung von Energie betrachtet werden.

$$CH_4 + 2\,O_2 \rightarrow CO_2 + 2\,H_2O$$

Bei Sauerstoffmangel kann die Reaktion nicht optimal stattfinden, und aus den gleichen Edukten entstehen die Produkte Kohlenmonoxid oder Kohlenstoff, in Form von Ruß, und Wasser. Zudem ist die Energieausbeute unter diesen Bedingungen geringer als unter optimalen Bedingungen.

Bei Verbrennungsmotoren genügt es für eine gute Energieausbeute nicht, der Verbrennung eine bestimmte Menge Kraftstoff sowie die zur Verbrennung mindestens benötigte Menge an Sauerstoff zuzuführen. Da bei Motoren, welche gasförmige Kraftstoffe verwenden, das Volumen des zugeführten Kraftstoffs gleichzeitig das maximal zuführbare Volumen an Luft, welche als $O_2$-Quelle dient, beschränkt - und umgekehrt -, wird stattdessen ein optimales Verhältnis von Kraftstoff zu Luft angestrebt.

Einige Kraftstoffe, wie z.B. Ottokraftstoff, besitzen eine im Wesentlichen konstante, bekannte Zusammensetzung und damit konstante Kraftstoffqualität/Energiegehalt, welche beispielsweise durch Raffinierung des Ausgangsmaterials gewährleistet wird. Bei anderen Kraftstoffen ist die Zusammensetzung z.B. abhängig von deren regionalem Ursprung.

Verfahren zur Steuerung der Verbrennung herkömmlicher, raffinierter Kraftstoffe auf Basis eines Sauerstoffgehalts im Verbrennungsabgas sind beispielsweise aus der US 6,085,718, EP 0 919 714 A2, EP 0 919 711 A2 oder EP 0 844 380 A2 bekannt.

Eine Aufgabe der Erfindung besteht daher darin, ein besonders geeignetes Verfahren zum Betrieb eines Antriebsaggregats anzugeben, welches eine Abweichung in der Zusammensetzung und in einer mit dieser assoziierten veränderlichen Kraftstoffqualität auszugleichen vermag. Darüber hinaus soll eine zur Durchführung des Verfahrens besonders geeignete Vorrichtung angegeben werden.

Bezüglich des Verfahrens wird diese Aufgabe erfindungsgemäß gelöst durch die Merkmale des Anspruchs 1.

Dazu erfolgt zunächst die Aufnahme mindestens eines kraftstoffbezogenen Datums. Hierzu wird als kraftstoffbezogenes Datum, beispielsweise mittels einer Lambda-Sonde, die z.B. eine Menge Sauerstoff in einem Abgas nach einer Verbrennung ermittelt, wobei ein Lambda-Wert von eins ("1.0") angestrebt wird und diesem Wert ein Luft/Kraftstoff Verhältnis als Massen- und/oder molares Verhältnis in [kg/kg] bzw. [mol/mol], welches ein Verhältnis der sauerstoffhaltigen Luft zu dem Kraftstoff angibt, zugeordnet ist. Alternativ kann als kraftstoffbezogenes Datum die Menge Sauerstoff im Abgas beispielsweise mittels einer Breitband-Lambda-Sonde bei einem Lambda-Wert von größer oder kleiner als eins ermittelt werden. In mindestens einer Datenbasis ist mindestens ein Referenzdatum, insbesondere jeweils ein Referenzdatum für unterschiedliche Kraftstoffe oder Kraftstoffgemische, hinterlegt und/oder hinterlegbar. Dieses mindestens eine Referenzdatum bezieht sich auf ein optimales Luft/Kraftstoff Verhältnis zur Verbrennung des jeweiligen Kraftstoffs oder Kraftstoffgemisches. Anhand des kraftstoffbezogenen Datums und anhand des mindestens einen Referenzdatums wird ein Qualitätsindikator ermittelt, z.B. durch Vergleich, evtl. nach geeigneter Anpassung oder Normierung, des Datums mit dem oder jedem Referenzdatum. Anhand des Qualitätsindikators wird mindestens ein Verbrennungsparameter ermittelt. Abschließend wird der mindestens eine Verbrennungsparameter einer Ansteuerung von mindestens einem Stellglied des Antriebsaggregats, z.B. einem Einlassventil für den Kraftstoff und/oder für ein sauerstoffhaltiges Medium zur Verbrennung des Kraftstoffs, zugrunde gelegt.

Zweckmäßige Weiterbildungen dieses Verfahrens sind Gegenstand der auf den diesbezüglichen unabhängigen Anspruch rückbezogenen Unteransprüche.

Bevorzugt vorgesehen ist, dass der Kraftstoff fest, flüssig oder gasförmig ist und/oder dass der verwendete Kraftstoff ein fossiler und/oder ein regenerativer Kraftstoff ist, wobei für unterschiedliche Kraftstoffe jeweils ein unterschiedliches Referenzdatum hinterlegt oder hinterlegbar ist.

Bevorzugt umfassen die Verbrennungsparameter mindestens eine Mengeninformation, z.B. eine molare Menge, ein Gewicht oder ein Volumen mindestens eines Edukts und/oder eines Produkts der Verbrennung und/oder eines zugeführten, sich bei der Verbrennung inert verhaltenden Mediums, wie beispielsweise $N_2$ oder eines rückgeführten

Abgases der Verbrennung, und/oder eine Temperatur, beispielsweise der Verbrennung, und/oder einen Druck, z.B. in einem Zylinder oder einen Druck eines Gases bei der Zuführung in den Zylinder oder einen Gaspartialdruck, und/oder einen Zeitpunkt, wie z.B. einen Zündzeitpunkt, und/oder eine Zeitspanne, wie z.B. eine Injektionsdauer des Kraftstoffs und/oder der Luft. Ist der Kraftstoff beispielsweise ein Gas und das sauerstoffhaltige Medium Luft, so ermöglicht beispielsweise die Ermittlung eines Druckes, z.B. mittels eines Drucksensors im Einlasskrümmer, die Bestimmung eines einem Verbrennungsraum eines Motors zugeführten Volumens von Luft oder Kraftstoff.

Bei der Injektion eines Kraftstoffs, insbesondere eines Gases, ist die Menge an injiziertem Gas unter anderem vom Druck des Gases im Einlasskrümmer, vom Residualvolumen der Verbrennungsabgase im Zylinder oder vom Volumen eines zweiten zugeführten Gases abhängig. Zudem beschränken maximal mögliche Drücke und Temperaturen im Zylinder, welche sich unter anderem aus der Klopffestigkeit der verwendeten Gase oder der Belastbarkeit des Zylinders oder Motors ergeben, die Menge an zuführbarem Kraftstoff und/oder Luft.

Bevorzugt vorgesehen ist, dass die Ermittlung des mindestens einen kraftstoffbezogenen Datums direkt oder indirekt, beispielsweise mittels der bereits erwähnten Lambda-Sonde, eines Druck- oder Massensensors, z.B. eines Luftmasse-Sensors, und/oder eines Drehmomentsensors erfolgt.

Wenn als sauerstoffhaltiges Medium Umgebungsluft verwendet wird, und die indirekte Ermittlung des dem Kraftstoff zugeordneten Datums auf Basis von nach der Verbrennung in dem oder jedem Produkt enthaltenem molekularem Sauerstoff - $O_2$ - erfolgt, dann ist bei einem Wert von Lambda=1 ein optimaler Wert für das Luft/Kraftstoff Verhältnis erreicht. Das Luft/Kraftstoff Verhältnis kann dabei als molares Verhältnis oder als Massenverhältnis ausgedrückt werden.

Anhand beispielsweise eines als kraftstoffbezogenes Datum fungierenden ermittelten Luft/Kraftstoff Verhältnisses und eines als Referenzdatum verwendeten Luft/Kraftstoff Verhältnis des.Referenzgases, z.B. für jeweils Lambda=1, ergibt sich ein Qualitätsindikator. Bei einer Verbrennung des Referenzgases würde sich also bei Lambda=1 als kraftstoffbezogenes Datum ein ermitteltes Luft/Kraftstoff Verhältnis ergeben, das dem gespeicherten Luft/Kraftstoff Verhältnis (für dasselbe) Referenzgas entspricht. Ein Quotient beider Verhältnisse resultiert zu "1.0", wobei für die Ermittlung des Qualitätsindikators in einer konkreten Ausprägung vorgesehen ist, dass der Quotient um "-1.0" verringert wird, um das Gesamtergebnis direkt für evtl. Korrekturen - ggf. auch nach einer Umwandlung in korrespondierende Prozentwerte - verwenden zu können.

Aufgrund des ermittelten Qualitätsindikators erfolgt eine Normalisierung oder eine vergleichbare geeignete Anpassung der verbrennungsparameter. Hierdurch wird zum einen ein optimales Luft/Kraftstoff-Verhältnis, z.B. als Massenverhältnis oder molares Verhältnis, eingestellt und zwar unter Berücksichtigung einer bei Kraftstoffen unterschiedlicher molekularer Zusammensetzung nötigen Korrektur der zugeführten Kraftstoffmenge, auf Grund derer eine Konstanthaltung der durch die Verbrennung erhaltenen Energie möglich ist.

Ist der Kraftstoff beispielsweise ein fossiles Gas, so ist z.B. seine Zusammensetzung aus Grundmolekülen abhängig von seinem geographischen Ursprung unterschiedlich. Nachdem die Grundmoleküle jedoch bei gleichem Ursprung in im Wesentlichen konstanten Verhältnissen vorliegen, ist besonders bevorzugt vorgesehen, dass beispielsweise die sich aus der unterschiedlichen Zusammensetzung ergebenden unterschiedlichen Energieinhalte durch eine geeignete Adaption der verbrennungsparameter ausgeglichen werden. Dies erfolgt beispielsweise durch Anpassung der Verbrennungsparameter an die jeweilige Zusammensetzung des Kraftstoffs oder an eine zu erzeugende Energie, eine Leistung, eine $CO_2$ Produktion, einen Schadstoffausstoß, eine Klopffestigkeit, eine energetische, z.B. thermische, Motorbelastung, einen Druck des Kraftstoffs oder ein zur Verbrennung erforderliches oder ein bei der Verbrennung maximal mögliches Kraftstoff-Volumen.

Wenn der Kraftstoff mit einem zweiten Kraftstoff gemischt wird und wenn beide Kraftstoffe in der gleichen Zustandsform vorliegen, beispielsweise bei der Mischung zweier Gase bei einem Zutankvorgang, bei welchem einer Residualmenge eines Gases in einem Vorratstank eine zweite Menge eines Gases mit unbekannten Parametern zugegeben wird, erfolgt zunächst eine Erkennung des Zutankvorgangs beispielsweise anhand einer Änderung eines Gasdrucks im Vorratstank oder eine Bestimmung einer Änderung eines Gewichtes des Vorratstanks. Eine daraufhin festgestellte Mischung zweier Gase löst, wie oben beschrieben, eine Aufnahme mindestens eines kraftstoffbezogenen Datums, beispielsweise durch Ermittlung des Sauerstoffgehalts des Abgases der Verbrennung, z.B. mittels der genannten Lambda-Sonde, aus. Eine derartige Aufnahme des mindestens einen kraftstoffbezogenen Datums, z.B. des Luft/Kraftstoff Verhältnisses bei Lamda=1, kann einmalig nach einem Zutankvorgang vorgesehen sein, oder wiederholt durchgeführt werden, beispielsweise zeitlich regelmäßig oder unregelmäßig beabstandet oder permanent während eines Betriebes des Antriebsaggregates und ermöglicht somit beispielsweise eine Anpassung der Verbrennungsparameter nach dem oben beschriebenen Prinzip an den Energieinhalt des Kraftstoffs oder der Kraftstoff-Mischung eines beliebigen Mischungsverhältnisses.

Bei der Verbrennung eines Kraftstoffgemisches, z.B. nach Zutanken eines weiteren Gases zu einem bereits im Kraftstofftank befindlichen Gas, ergibt sich als kraftstoffbezogenes Datum beispielsweise für unterschiedliche Lambda-Werte jeweils ein zugehöriges Luft/Kraftstoff Verhältnis. Bei Lambda=1 liegt ein optimales Luft/Kraftstoff Verhältnis vor. Durch Vergleich beispielsweise dieses optimalen Luft/Kraftstoff Verhältnisses, also des kraftstoffbezogenen Datums, mit für einen oder mehrere Referenzkraftstoffe oder Referenzkraftstoffgemische, im Folgenden zusammenfassend nur als Referenzkraftstoff bezeichnet, in einer Datenbasis beispielsweise hinterlegten Luft/Kraftstoff Verhältnissen, dem Referenzdatum, wird gegebenenfalls nach geeigneter Anpassung oder Normierung ermittelt, mit welchem Referenzkraftstoff das tatsächliche Kraftstoffgemisch die größte Übereinstimmung aufweist. Zur Repräsentation eines Referenzkraftstoffs kommt dabei alternativ oder zusätzlich z.B. auch die Ermittlung von Referenzdaten für fiktive" Referenzgase anhand eines oder mehrerer "Basis"-Referenzgase in Betracht. Jeweils ein Referenzdatum für solche fiktive Referenzgase wird z.B. anhand vorgegebener oder vorgebbarer mathematischer Operationen, z.B. Multiplikation mit +4%, +2%, -2%, -4%, usw., aus dem jeweiligen Referenzdatum des jeweiligen "Basis"-Referenzgases abgeleitet. Kraftstoffparameter, wie z.B. ein Methan-, Butan, Pentan-Gehalt, etc., die für denjenigen Referenzkraftstoff, mit dem die größte Übereinstimmung besteht, hinterlegt sind, werden für die Verbrennung des tatsächlichen Kraftstoffgemisches zugrunde gelegt. Als Kraftstoffparameter kommt darüber hinaus z.B. auch eine Injektionsmenge bei vorgegebenem Druck oder ein "low heating value" ("LHV") in Betracht.

Eine Auswahl eines jeweiligen Referenzgases kann dabei zusätzlich oder alternativ auch anhand anderer Referenzdaten, z.B. bei Aufnahme einer Gasdichte als kraftstoffbezogenes Datum, anhand eines für jeden Referenzkraftstoff hinterlegten Wertes für eine Gasdichte erfolgen.

Weitere hinterlegte oder hinterlegbare Kraftstoffparameter eines Referenzgases beziehen sich z.B. auf den "low heating value" ("LHV"), einen "high heating value" ("HHV"), eine spezifische Gasdichte im Verhältnis zu Luft oder einer spezifischen Gasdichte im Verhältnis zu dem Referenzgas, usw. Bei Aufnahme eines zu einem dieser Parameter passenden Datums kann eine Auswahl des jeweiligen Referenzgases auch anhand von auf solche Kraftstoffparameter bezogenen Referenzdaten erfolgen.

Wenn auf diese Weise bei einem tatsächlichen Kraftstoffgemisch ein dem Kraftstoffgemisch ähnliches Referenzgas ermittelt wurde, wird ein für das jeweilige Referenzgas hinterlegter Qualitätsindikator zur Normalisierung der Verbrennungsparameter, wie z.B. eine zuzuführende Kraftstoffmenge, eine Luftmenge, ein Druck, eine Temperatur oder ein Zündzeitpunkt, herangezogen.

Somit lassen sich unterschiedliche Qualitäten oder Zusammensetzungen eines Kraftstoffs oder Kraftstoffgemisches ohne eine Kenntnis der tatsächlichen Qualität oder Zusammensetzung ausgleichen. Im Ergebnis steht also aus der Verbrennung eine im Wesentlichen konstante Energieausbeute zur Verfügung.

Beim Einsatz der Erfindung in einem Kraftfahrzeug führt die oben beschriebene Normalisierung der Verbrennungsparameter anhand des jeweiligen Qualitätsindikators dazu, dass unabhängig von den jeweils verwendeten Kraftstoffen oder Kraftstoffgemischen ein Nutzer des Kraftfahrzeugs ein im Wesentlichen gleich bleibendes Ansprechverhalten des jeweiligen Antriebsaggregats beim Abruf von Leistung, z.B. durch Betätigung des Gaspedals, wahrnimmt.

Die Erfindung erfasst neben dem oben beschriebenen Verfahren zum Betrieb des Antriebsaggregats eines Kraftfahrzeugs auch eine Implementation des Verfahrens in einer durch einen Computer ausführbaren Form, also insbesondere einem Computerprogramm mit durch einen Computer ausführbaren Programmcodeanweisungen zur Implementierung des oben beschriebenen Verfahrens und eventuell nachfolgend dargestellter Ausgestaltungen, wenn das Computerprogramm auf einem Computer ausgeführt wird. Darüber hinaus erfasst die Erfindung auch eine zur Ausführung des Verfahrens geeignete und vorgesehene Vorrichtung.

Weiterhin bevorzugt umfasst die Erfindung ein Antriebsaggregat mit Mitteln, insbesondere Programmcodemitteln, also z.B. einer Softwareimplementation des oder jedes oben genannten Verfahrensschrittes oder der oder jeder oben genannten Verfahrensschrittfolge, zur Durchführung des Verfahrens.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie z.B. Prüfverfahren betreffen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen

Fig. 1   eine schematisch vereinfachte Darstellung eines Antriebsaggregats,
Fig. 2   in schematisch vereinfachter Form eine Prinzipdarstellung zum Ablauf des erfindungsgemäßen Verfahrens und
Fig. 3   in schematisch vereinfachter Form eine Ermittlung eines optimalen Verbrennungsparameters.

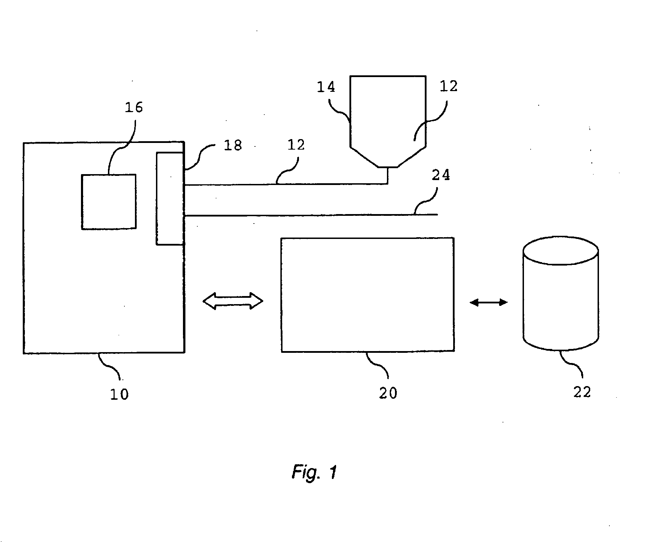

Fig. 1 zeigt eine schematisch vereinfachte Darstellung eines Antriebsaggregats 10, z.B. zur Verwendung in einem nicht dargestellten Kraftfahrzeug, welches zur Verbrennung mindestens eines Kraftstoffs 12, der in an sich bekannter Art und Weise in einem Kraftstofftank 14 gelagert ist, vorgesehen ist. Dem Antriebsaggregat 10 ist ein Sensor 16 sowie ein Stellglied 18 zugeordnet. Als Stellglied 18 ist dabei bevorzugt ein Einlassventil oder dergleichen vorgesehen. Zur Steuerung des Antriebsaggregats 10 ist eine Verarbeitungseinheit 20 vorgesehen, die zum Beispiel Bestandteil eines bei modernen Kraftfahrzeugen üblicherweise vorgesehenen Steuergerätes ist. Die Verarbeitungseinheit 20 umfasst oder hat Zugriff auf eine Datenbasis 22. Über das Stellglied 18 gelangt auch Sauerstoff zur Verbrennung des Kraftstoffs 12 zum Beispiel in Form von Umgebungsluft 24 in das Antriebsaggregat 10.

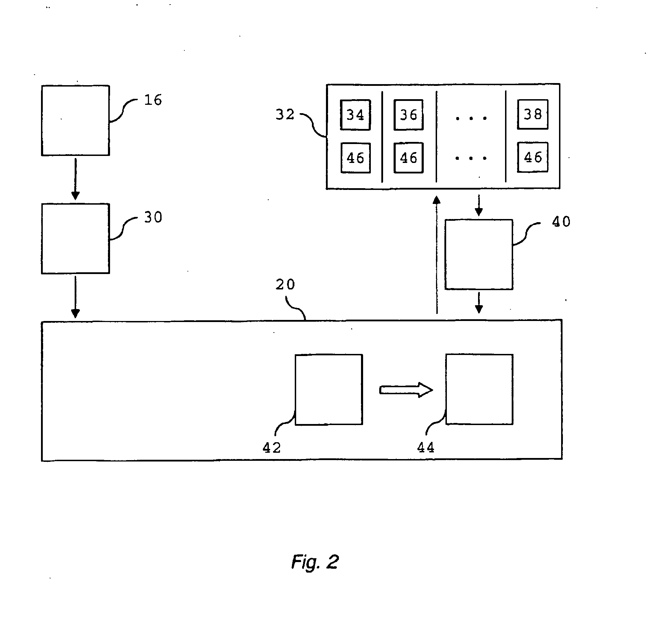

Fig. 2 zeigt in ebenfalls schematisch vereinfachter Form eine Prinzipdarstellung zum Ablauf des erfindungsgemäßen Verfahrens. Danach wird vom Sensor 16 ein kraftstoffbezogenes Datum 30 geliefert und an die Verarbeitungseinheit 20 zur weiteren Auswertung übermittelt. Das kraftstoffbezogene Datum 30 repräsentiert zum Beispiel ein tatsächliches Luft-/Kraftstoffverhältnis des durch das Antriebsaggregat 10 verbrannten Kraftstoffs 12 bei Zufuhr von Umgebungsluft 24. Mit diesem kraftstoffbezogenen Datum 30 greift die Verarbeitungseinheit 20 auf eine in der Datenbasis 22 (Fig. 1) hinterlegte erste Tabelle 32 zu, in der für mindestens einen Referenzkraftstoff Kraftstoffparameter und dergleichen sowie mindestens ein Referenzdatum 34, 36, 38 hinterlegt sind, wobei sich jedes Referenzdatum 34-38 gegebenenfalls nach einer vorherigen Normierung zum Vergleich mit dem kraftstoffbezogenen Datum 30 eignet.

In diesem Zusammenhang führt die Verarbeitungseinheit 20 einen Vergleich des kraftstoffbezogenen Datums 30 mit jedem in der ersten Tabelle 32 hinterlegten Referenzdatum 34-38 durch und übernimmt aus der ersten Tabelle 32 dasjenige Referenzdatum 34-38, bei dem größtmögliche Übereinstimmung mit dem kraftstoffbezogenen Datum 30 besteht, als aktuelles Referenzdatum 40, im Folgenden kurz ebenfalls als Referenzdatum 40 bezeichnet. Mit beispielsweise dem kraftstoffbezogenen Datum 30 und dem Referenzdatum 40 bildet die Verarbeitungseinheit 20 einen Qualitätsindikator 42, zum Beispiel durch Division des kraftstoffbezogenen Datums 30 und des Referenzdatums 40, oder wählt einen Qualitätsindikator 42 aus. Konkret kann vorgesehen sein, dass der Qualitätsindikator 42, der im Folgenden auch mit dem Formelzeichen Q bezeichnet ist, nach der folgenden Formel ermittelt wird:

$$Q = (\text{kraftstoffbezogenes Datum 30 / Referenzdatum 40}) - \text{„1"}$$

Der Qualitätsindikator 42 wird dann zur Ableitung von Verbrennungsparametern 44 zur Ansteuerung des Antriebsaggregats 10 (Fig. 1) verwendet, wobei die Ableitung solcher Verbrennungsparameter 44 insbesondere Normierung meint. Als Verbrennungsparameter 44 kommt dabei insbesondere eine Kraftstoffmenge und dergleichen in Betracht, wobei ein solcher Verbrennungsparameter 44, also zum Beispiel die Kraftstoffmenge, zur Ansteuerung des Stellglieds 18 (Fig. 1) durch die Verarbeitungseinheit 20 herangezogen wird.

Bei einer so genannten Lambda-Sonde als Sensor 16 liefert diese einen Lambda-Wert, der ein Maß für eine nach der Verbrennung des Kraftstoffs 12 verbleibende Restmenge von Sauerstoff liefert. Dies ist an sich bekannt und bei modernen Antriebsaggregaten kann eine Regelung vorgesehen sein, die darauf abzielt, den Lambda-Wert auf "1,0" zu regeln. Die bei der Regelung verwendeten Regelungsparameter beziehen sich zumindest auf eine Luftmenge und eine Kraftstoffmenge. Das Verhältnis aus dieser Luft- und Kraftstoffmenge entspricht dem oben beschriebenen kraftstoffbezogenen Parameter 30 und wird in der oben beschriebenen Art dem Verfahren gemäß der Erfindung zugrunde gelegt. Alternativ kann die Datenaufnahme beispielsweise mittels einer Breitband-Lambda-Sonde auch bei Lambda-Werten ungleich "1" erfolgen.

Alternativ kann auch vorgesehen sein, dass anstelle eines Quotienten aus zwei Volumina für das kraftstoffbezogene Datum 30 oder das Referenzdatum 34-40 eines der den Quotienten bildenden Volumina zugrunde gelegt wird. Wenn sich zum Beispiel bei einer Regelung des Lambda-Wertes auf "1,0" eine dafür erforderliche Luft- und Kraftstoffmenge oder ein dafür erforderliches Luft- und Kraftstoffvolumen ergibt, kann als kraftstoffbezogenes Datum 30 zum Beispiel das Kraftstoffvolumen angesetzt werden, wobei als Referenzdatum 34-40 dann ein entsprechendes Volumen des Referenzkraftstoffs angesetzt wird, das in der ersten Tabelle 32 entweder hinterlegt ist oder aus weiteren Kraftstoffparametern 46 anhand an sich bekannter stöchiometrischer Beziehungen ermittelt wird.

EP 1 847 704 B1

Die bisherige Beschreibung der Figuren ist davon ausgegangen, dass im Kraftstoffbehälter 14 als Kraftstoff 12 ein Gas bekannter Zusammensetzung vorliegt. In der Praxis wird sich dies nicht immer realisieren lassen, zum Beispiel dann nicht, wenn das Antriebsaggregat 12 zum Antrieb eines Kraftfahrzeugs verwendet wird und der Fahrer beim Betrieb des Kraftfahrzeugs den Kraftstofftank 14 mit einem weiteren Gas auffüllt. Dann liegt im Kraftstofftank 14 als Kraftstoff 12 ein Gasgemisch unbekannter Zusammensetzung vor.

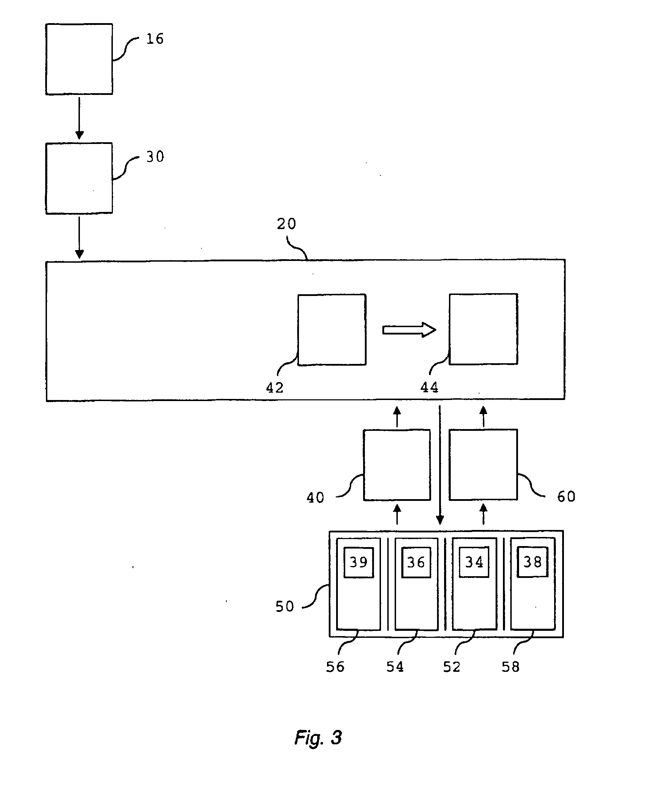

Die Ermittlung optimaler Verbrennungsparameter 44 für ein solches Gasgemisch als Kraftstoff 12 wird im Folgenden anhand der schematisch vereinfachten Darstellung in Fig. 3 erläutert. Bei der Verbrennung des jetzt als Gasgemisch vorliegenden Kraftstoffs 12 wird erneut vom Sensor 16 ein kraftstoffbezogenes Datum 30 geliefert, das beispielsweise erneut das Luft/Kraftstoff Verhältnis bei einem Wert von Lambda = 1 angibt. In einer zweiten Tabelle 50, die ebenfalls in der Datenbasis 22 (Fig. 1) hinterlegt sein kann, sind Kraftstoffparameter für zumindest ein Basis-Referenzgas 52 sowie Ableitungen davon als "fiktive" Referenzgase 54, 56, 58 hinterlegt. Die in der zweiten Tabelle 50 für das Basis-Referenzgas 52 und die "fiktiven" Referenzgase 54-58 hinterlegten Daten umfassen jeweils zumindest ein Referenzdatum 34, 36, 38, 39. Neben dem Basis-Referenzgas 52 werden ein oder mehrere fiktive Referenzgases 54, 56, 58 verwaltet. Für diese ergibt sich ein jeweiliges Referenzdatum 36, 38, 39 zum Beispiel aus dem Referenzdatum 34 des jeweiligen Basis-Referenzgases 52 anhand vorgegebener oder vorgebbarer mathematischer Operationen, zum Beispiel durch Multiplikation mit - 4 %, - 2 %, + 2 %, + 4 % usw. Jedes Referenzdatum 34-38 in dieser zweiten Tabelle 50 wird durch die verarbeitungseinheit 20 mit dem kraftstoffbezogenen Datum 30 verglichen und das jenige Referenzdatum 34-38 ausgewählt, das die größte Übereinstimmung mit dem kraftstoffbezogenen Datum 30 aufweist und als ausgewähltes Referenzdatum 40, im Folgenden ebenfalls kurz als Referenzdatum 40 bezeichnet, an die Verarbeitungseinheit 20 übermittelt wird. Anhand des kraftstoffbezogenen Datums 30 auf Basis der vom Sensor 16 gelieferten Daten und des Referenzdatums 40 aus der zweiten Tabelle 50 wird wie oben bereits beschrieben erneut der Qualitätsindikator 42 abgeleitet, wobei gegebenenfalls gleiche mathematische Beziehungen wie oben beschrieben zugrunde gelegt werden. Dann wird wieder, wie ebenfalls bereits oben beschrieben, anhand des Qualitätsindikators 42 eine Normierung der Verbrennungsparameter 44 durchgeführt und diese der Ansteuerung des Stellglieds 18 (Fig. 1) durch die Verarbeitungseinheit 20 zugrunde gelegt.

Alternativ kann auch vorgesehen sein, dass aus der zweiten Tabelle 50 nicht das jeweils "am besten" zum kraftstoffbezogenen Datum 30 passende Referenzdatum 34-38 entnommen wird, sondern dass anstelle des Redungsgemäßen Verfahren ergebenden Verbrennungsparameter 44 so verbrannt, dass die in dem Kraftstoff 12 enthaltene Energie optimal genutzt wird. In einer weiteren Ausgestaltung der Erfindung kann vorgesehen sein, dass bei der Ermittlung der Verbrennungsparameter 44 nicht nur auf eine optimale Ausnutzung der in dem Kraftstoff 12 enthaltenen Energie abgestellt wird, sondern dass auch eine Bereitstellung der jeweils durch den Nutzer abgerufenen Energie, zum Beispiel durch Betätigung des Gaspedals, abgestellt wird. Im Ergebnis führt dies dazu, dass zum Beispiel bei einem energiereichen Kraftstoff 12 bei einer Auslenkung des Gaspedals in eine bestimmte Position ein vergleichsweise geringeres Kraftstoffvolumen zur Verbrennung gebracht wird, als bei einem minderqualitativen und/oder energieärmeren Kraftstoff 12. Es kann auch vorgesehen sein, dass in die Ermittlung der Verbrennungsparameter 44 weitere Kraftstoffparameter 46 (nur in Fig. 2 dargestellt) einfließen.

Zusammenfassend lässt sich die vorliegende Erfindung damit kurz wie folgt beschreiben: Es wird ein Verfahren und eine korrespondierende Vorrichtung zum Betrieb eines Antriebsaggregats 10 auf Basis einer Verbrennung mindestens eines Kraftstoffs 12 angegeben, wobei eine Aufnahme mindestens eines kraftstoffbezogenen Datums 30, insbesondere mittels eines Sensors 16, erfolgt, wobei in mindestens einer Datenbasis 22 mindestens ein Referenzdatum 34-38 hinterlegt und/oder hinterlegbar ist, wobei anhand des kraftstoffbezogenen Datums 30 und anhand des mindestens einen Referenzdatums 34-36; 40 ferenzdatums 34-38 aus dem jeweiligen Datensatz, also den das oder jedes Basis-Referenzgas 52 und daraus abgeleitete fiktive Gase 54-58 beschreibenden Datensätzen ein Korrekturparameter 60 entnommen wird, der direkt zur Ermittlung der Verbrennungsparameter 44, eventuell sogar direkt zur Ansteuerung des Stellglieds 18 (Fig. 1) herangezogen werden kann.

Der der Erfindung zugrunde liegende Gedanke basiert also auf der Erkenntnis, dass bei Verwendung von gasförmigen Kraftstoffen deren Zusammensetzung insbesondere je nach Herkunft variiert und entsprechend unterschiedliche Qualitäten, insbesondere unterschiedliche Energieinhalte, aufweisen. Der Nutzer eines Kraftfahrzeuges würde also bei Verwendung eines energiereichen Gases als Kraftstoff 12 zum Beispiel ein in etwa erwartetes Verhalten seines Fahrzeugs wahrnehmen, während er bei Verwendung eines minderqualitativen oder energiearmen Gases als Kraftstoff 12 dies als Energieeinbuße wahrnähme. Die Erfindung zielt nun darauf ab, solche vermeintlichen Energieeinbußen auszugleichen, indem das jeweilige Gas, also der jeweils zur Verbrennung vorgesehene Kraftstoff 12, erkannt wird, was anhand des Vergleichs von kraftstoffbezogenem Datum 30 und Referenzdatum 34-38 erfolgt. Aus diesem Vergleich leitet sich der Qualitätsindikator 42 ab, der wiederum maßgeblich für bei der Verbrennung des jeweiligen Kraftstoffs 12 zugrunde zu legende Verbrennungsparameter 44 ist. Das heißt, auch ein minderqualitativer Kraftstoff würde aufgrund der sich nach dem erfinein Qualitätsindikator 42 ermittelt wird, wobei anhand des Qualitätsindikators 42 mindestens ein Verbrennungsparameter 44 ermittelt wird und wobei mindestens ein Verbrennungsparameter 44 einer Ansteuerung von mindestens einem Stellglied 18 für den Einlass des Kraftstoffs 12 und Umgebungsluft 24 in das Antriebsaggregat 10 zugrunde gelegt wird.

Bezugszeichenliste

| | |
|---|---|
| 10 | Antriebsaggregat |
| 12 | Kraftstoff |
| 14 | Kraftstofftank |
| 16 | Sensor |
| 18 | Stellglied |
| 20 | Verarbeitungseinheit |
| 22 | Datenbasis |
| 24 | Umgebungsluft |
| 30 | kraftstoffbezogenes Datum |
| 32 | erste Tabelle |
| 34 | Referenzdatum |
| 36 | Referenzdatum |
| 38 | Referenzdatum |
| 39 | Referenzdatum |
| 40 | aktuelles Referenzdatum |
| 42 | Qualitätsindikator |
| 44 | Verbrennungsparameter |
| 50 | zweite Tabelle |
| 52 | Basis-Referenzgas |
| 54 | "fiktives" Referenzgas |
| 56 | "fiktives" Referenzgas |
| 58 | "fiktives" Referenzgas |
| 60 | Korrekturparameter |

**Patentansprüche**

**1.** Verfahren zum Betrieb eines Antriebsaggregats (10) auf Basis einer Verbrennung eines gasförmigen Kraftstoffs (12) mit veränderlicher Qualität,
wobei eine Aufnahme eines ein Luft-Kraftstoff Verhältnis beschreibenden kraftstoffbezogenen Datums (30) erfolgt,
wobei ein Verbrennungsparameter (44) einer Ansteuerung von einem Stellglied (18) für den Einlass des Kraftstoffs (12) und eines sauerstoffhaltigen Mediums in das Antriebsaggregat (10) zugrunde gelegt wird,
**dadurch gekennzeichnet dass**
in einer Datenbasis (22) ein Referenz-Luft-Kraftstoff Verhältnis als ein Referenzdatum (34, 36, 38, 39; 40) für unterschiedliche Kraftstoffe (12) oder Kraftstoffgemische hinterlegt und/oder hinterlegbar ist,
wobei der Kraftstoff (12) die veränderliche Qualität aufgrund eines Gemisches aus unterschiedlichen Grundmolekülen aufweist und dem Referenzdatum (34, 36, 38, 39; 40) ein Verhältnis der Grundmoleküle zugrunde gelegt wird,
wobei anhand des kraftstoffbezogenen Datums (30) und anhand des Referenzdatums (34, 36, 38, 39; 40) ein auf die Kraftstoffqualität bezogener Qualitätsindikator (42) ermittelt wird und
wobei anhand des Qualitätsindikators (42) der Verbrennungsparameter (44) ermittelt wird.

**2.** Verfahren nach Anspruch 1, wobei ein fossiler Kraftstoff (12) und/oder ein regenerativer Kraftstoff (12) verwendet wird.

**3.** Verfahren nach Anspruch 1 oder 2, wobei die Verbrennungsparameter (44) mindestens eine Mengeninformation mindestens eines Edukts und/oder eines Produkts der Verbrennung und/oder eines zugeführten, sich bei der Verbrennung inert verhaltenden Mediums und/oder eine Temperatur und/oder einen Druck und/oder einen Zeitpunkt und/oder eine Zeitspanne umfassen.

**4.** Verfahren nach einem der Ansprüche 1 bis 3, wobei die Ermittlung des kraftstoffbezogenen Datums (30) direkt oder indirekt erfolgt.

5. Verfahren nach einem der Ansprüche 1 bis 4, wobei als sauerstoffhaltiges Medium Umgebungsluft (24) vorgesehen ist und eine indirekte Ermittlung des kraftstoffbezogenen Datums (30) auf Basis von nach der Verbrennung in dem/den Produkt/Produkten enthaltenen molekularen Sauerstoffs erfolgt.

6. Verfahren nach einem der vorangehenden Ansprüche, wobei die Ermittlung des Qualitätsindikators (42) zumindest eine Division des Referenzdatums (40) und des kraftstoffbezogenen Datums (30) umfasst.

7. Verfahren nach einem der Ansprüche 1 bis 6, wobei der Kraftstoff (12) ein Gemisch aus unterschiedlichen Grundmolekülen mit im Wesentlichen konstanten Verhältnissen ist, wobei unterschiedliche Kraftstoffe (12) sich insbesondere in ihrem Verhältnis der Grundmoleküle unterscheiden.

8. Verfahren nach einem der vorangehenden Ansprüche, wobei der Kraftstoff (12) mit einem zweiten, insbesondere in der gleichen Zustandsform vorliegenden Kraftstoff (12) gemischt wird,
wobei das ermittelte kraftstoffbezogene Datum (30) ein ermitteltes Luft/Kraftstoff Massenverhältnis oder ein ermitteltes molares Luft/Kraftstoff Verhältnis ist, welches mit einem als Referenzdatum (34-39; 40) in der Datenbasis (22) für ein Referenzgas (52; 54, 55, 56) hinterlegten Luft/Kraftstoff Massenverhältnis oder hinterlegten molaren Luft/Kraftstoff Verhältnis verglichen wird,
wobei sich in Ansehung eines Ergebnisses dieses Vergleichs des kraftstoffbezogenen Datums (30) mit jedem Referenzdatum (34-39; 40) ein Korrekturparameter (60) ergibt, anhand dessen der Verbrennungsparameter (44) abgeleitet wird.

9. Computerprogramm mit durch einen Computer ausführbaren Programmcodeanweisungen zur Implementierung des Verfahrens nach einem der Ansprüche 1 bis 8 wenn das Computerprogramm auf einem Computer ausgeführt wird.

10. Computerprogrammprodukt, insbesondere Speichermedium, mit einem durch einen Computer ausführbaren Computerprogramm gemäß Anspruch 9.

11. Antriebsaggregat (10) mit Mitteln, insbesondere Programmcodemitteln, also z.B. einer Softwareimplementation des oder jedes oben genannten Verfahrensschrittes oder der oder jeder oben genannten Verfahrensschrittfolge, zur Durchführung des Verfahrens nach einem der Ansprüche 1 bis 8.

**Claims**

1. Method for operation of a drive unit (10) based on a combustion of a gaseous fuel (12) having a variable quality, wherein fuel-based data (30) describing an air-fuel ratio is received,
wherein a combustion parameter (44) is the basis for controlling an actuator (18) for intake of fuel (12) and an oxygen-containing medium into the drive unit (10),
**characterized in that**
a reference air-fuel ratio as a reference data (34, 36, 38, 39; 40) for various fuels (12) or fuel mixtures is deposited and/or can be deposited in a data base (22),
wherein the fuel (12) has the variable quality due to a mixture of various basic molecules and a basic molecules ratio is the basis for the reference data (34, 36, 38, 39; 40),
wherein a quality indicator (42) is determined on the basis of the fuel-based data (30) and on the basis ofreference data (34, 36, 38, 39; 40) referring to the fuel quality, and
wherein the combustion parameter (44) is determined from the quality indicator (42).

2. Method according to claim 1, wherein a fossil fuel (12) and/or a regenerative fuel (12) is used.

3. Method according to claim 1 or 2, wherein the combustion parameters (44) include at least a quantity information of at least a reagent and/or a product of combustion and/or an added medium inert with the combustion and/or temperature and/or pressure and/or time and/or time interval.

4. Method according to one of the claims 1 to 3, wherein determining the fuel-based data (30) occurs direct or indirect.

5. Method according to one of the claims 1 to 4, wherein ambient air (24) is provided as oxygen-containing medium and an indirect determination of the fuel-based data (30) is made on the basis of molecular oxygen contained in the product/products after the combustion.

**6.** Method according to one of the preceding claims, wherein the determination of the quality indicator (42) includes at least a division of the reference data (40) and the fuel-based data (30).

**7.** Method according to one of the claims 1 to 6, wherein the fuel (12) is a mixture of different basic molecules with essentially constant ratios, wherein different fuels (12) differ in particular in their ratio of the basic molecules.

**8.** Method according to one of the preceding claims, wherein the fuel (12) is mixed with a second fuel (12), in particular being in the same condition form,
wherein the determined fuel-based data (30) is a determined air/fuel mass ratio or a determined molar air/fuel ratio, which is compared to an air/fuel mass ratio or a molar air/fuel ratio, respectively deposited as reference data (34-39; 40) in the database (22) for a reference gas (52; 54, 55, 56),
wherein a correction parameter (60) results as a result of this comparison of the fuel-based data (30) with the respective reference data (34-39; 40), based on which the combustion parameter (44) is derived.

**9.** Computer program with computer-executable program code instructions for implementation of the method according to one of the claims 1 to 8 if the computer program is executed on a computer.

**10.** Computer program product, in particular storage medium, with a computer-executable computer program according to claim 9.

**11.** Drive unit (10) with means, in particular program code means, e.g. a software implementation of the or each above method step or the or each method step sequence, for implementation of the method according to one of the claims 1 to 8.

**Revendications**

**1.** Procédé pour le fonctionnement d'un groupe d'entraînement (10) en se basant sur une combustion d'un carburant (12) sous forme gazeuse avec une qualité variable,
dans lequel on effectue un enregistrement d'une donnée (30) qui est relative au carburant et qui décrit un rapport air/carburant,
dans lequel un paramètre de combustion (44) est utilisé comme base pour un pilotage d'un organe de positionnement (18) pour l'admission du carburant (12) et d'un milieu contenant de l'oxygène dans le groupe d'entraînement (10),
**caractérisé en ce que**
un rapport de référence air/carburant est mémorisé et/ou capable d'être mémorisé dans une base de données (22) sous forme d'une donnée de référence (34, 36, 38, 39 ; 40) pour des carburants (12) ou pour des mélanges de carburants différents,
dans lequel le carburant (12) présente ladite qualité variable en raison d'un mélange de différentes molécules de base et un rapport des molécules de base est mémorisé en tant que base pour la donnée de référence (34, 36, 38, 39 ; 40),
dans lequel on détermine un indicateur de qualité (42) qui est relatif à la qualité du carburant, au moyen de la donnée (30) relative au carburant et au moyen de la donnée de référence (34, 36, 38, 39 ; 40), et
dans lequel on détermine le paramètre de combustion (44) au moyen de l'indicateur de qualité (42).

**2.** Procédé selon la revendication 1, dans lequel on utilise un carburant fossile (12) et/ou un carburant (12) régénératif.

**3.** Procédé selon la revendication 1 ou 2, dans lequel les paramètres de combustion (44) comprennent au moins une information de quantité d'au moins un éduit et/ou d'un produit de la combustion et/ou d'un milieu admis qui se comporte de façon inerte pendant la combustion et/ou une température et/ou une pression et/ou un instant et/ou une période temporelle.

**4.** Procédé selon l'une des revendications 1 à 3, dans lequel la détermination de la donnée relative au carburant (30) a lieu de manière directe ou indirecte.

**5.** Procédé selon l'une des revendications 1 à 4, dans lequel on utilise de l'air environnant (24) à titre de milieu contenant de l'oxygène, et on effectue une détermination indirecte de la donnée (30) relative au carburant en se basant sur l'oxygène moléculaire contenu dans le ou les produit(s) après la combustion.

6. Procédé selon l'une des revendications précédentes, dans lequel la détermination de l'indicateur de qualité (42) comprend au moins une division de la donnée de référence (40) et de la donnée (30) relative au carburant.

7. Procédé selon l'une des revendications 1 à 6, dans lequel le carburant (12) est un mélange de différentes molécules de base avec des rapports essentiellement constants, tels que des carburants différents (12) se distinguent en particulier dans leur rapport des molécules de base.

8. Procédé selon l'une des revendications précédentes, dans lequel le carburant (12) est mélangé avec un second carburant (12), qui se présente en particulier sous la même forme d'état,
dans lequel la donnée déterminée (30) relative au carburant est un rapport de masse déterminé air/carburant ou un rapport molaire déterminé air/carburant, qui est comparé avec un rapport de masse mémorisé air/carburant ou un rapport molaire mémorisé air/carburant, mémorisé à titre de donnée de référence (34-39 ; 40) dans la base de données (22) pour un gaz de référence (52 ; 54, 55, 56),
de sorte qu'en considération d'un résultat de cette comparaison de la donnée (30) relative au carburant avec chaque donnée de référence (34-39 ; 40), il en résulte un paramètre de correction (60), au moyen duquel on dérive le paramètre de combustion (44).

9. Programme d'ordinateur avec des instructions formant code de programme exécutable par un ordinateur pour la mise en oeuvre du procédé selon l'une des revendications 1 à 8 quand le programme d'ordinateur est exécuté sur un ordinateur.

10. Produit de programme d'ordinateur, en particulier support de mémoire, comprenant un programme d'ordinateur selon la revendication 9, exécutable par un ordinateur.

11. Groupe d'entraînement (10) comprenant des moyens, en particulier des moyens formant code de programme, donc par exemple une mise en oeuvre logicielle de l'étape de procédé ou de chaque étape de procédé précitée(s) ou de la succession d'étapes de procédé ou de chaque succession d'étapes de procédé précitée(s), pour la mise en oeuvre du procédé selon l'une des revendications 1 à 8.

*Fig. 1*

*Fig. 2*

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6085718 A
- EP 0919714 A2
- EP 0919711 A2
- EP 0844380 A2